# EUROPÄISCHE PATENTSCHRIFT

(11) **EP 0 418 762 B1**
(45) Veröffentlichungstag und Bekanntmachung des Hinweises auf die Patenterteilung: **24.11.1993**
(21) Anmeldenummer: 90117784.0
(22) Anmeldetag: 15.09.1990
(51) Int. Cl.: B60B 21/10

(54) **Luftbereiftes Fahrzeugrad**
Wheel and pneumatic tyre assembly
Roue de véhicule à pneumatique

(30) Priorität: 22.09.1989 DE 3931675
(43) Veröffentlichungstag der Anmeldung: 27.03.1991
(73) Patentinhaber: Continental Aktiengesellschaft, 30165 Hannover (DE)
(72) Erfinder: Spitz, Wolfgang, D-3000 Hannover 91 (DE)

(56) Entgegenhaltungen:
- EP-A- 0 079 454
- EP-A- 0 149 224
- DE-A- 3 246 086
- DE-A- 3 713 309
- FR-A- 333 125
- GB-A- 2 030 086
- GB-A- 2 030 087
- US-A- 4 169 496

## Beschreibung

Die Erfindung betrifft ein Luftbereiftes Fahrzeugrad nach dem Oberbegriff von Patentanspruch 1.

Ein solches Fahrzeugrad wird z.B. in der DE-OS 30 00 428 und in der DE-OS 38 04 505 beschrieben. Bei den bisherigen Fahrzeugrädern dieser Art verliefen die seitlichen Felgenhörner exakt nach radial innen, d.h. senkrecht zur Felgenachse, um eine ausreichende Platzdrucksicherheit zu erzielen. Die Reifenmontage erfolgt bei diesen Fahrzeugrädern mit Spezialwerkzeugen, die gewährleisten müssen, daß der im Durchmesser größere Reifenwulst bei der Montage die Felgenhörner überwinden kann.

Aus der GB-A-2 030 087 ist ein Fahrzeugrad bekannt, bei dem die Reifenwülste sich am radial inneren Umfang der Felge befinden. Die Felgenhörner verlaufen gegenüber der Radialrichtung nach außen hin geneigt. Der Reifen läßt sich bei diesem Fahrzeugrad nur auf eine mehrteilige Felge montieren, da keine Montagehochbetten vorhanden sind. Weiterhin ist der Reifen für einen Notlauf nicht geeignet.

Aus der FR-A-333 125 ist ein Fahrzeugrad bekannt, bei dem die Reifenwülste ebenfalls am radial inneren Umfang einer Felge mit geneigten Felgenhörnern angeordnet sind. Die Reifenwülste weisen keine zugfesten Wulstkerne auf, da sie mit solchen auf der beschriebenen Felge nicht montierbar wären. Um die Reifenwülste auf der Felge zu halten, sind Klemmringe erforderlich. Der Reifen ist mit einem Schlauch ausgestattet, so daß er für einen Notlauf über längere Strecken nicht geeignet ist.

Der Erfindung liegt die Aufgabe zugrunde, unter Beibehaltung der Platzdrucksicherheit die Reifenmontage zu erleichtern.

Diese Aufgabe wird bei einem Fahrzeugrad der eingangs gennanten Art erfindungsgemäß durch die im Kennzeichen von Patentanspruch 1 angeführten Merkmale gelöst.

Der Erfindung liegt die überraschende Erkenntnis zugrunde, daß man eine ausreichende Platzdrucksicherheit auch dann erzielt, wenn man die Felgenhörner ohne Veränderung ihrer Höhe geneigt anordnet, und zwar bevorzugt unter einem Neigungswinkel zwischen 25 und 35° zur Radialrichtung. Die Erklärung könnte darin liegen, daß durch eine derartige Anordnung die an den zug- und druckfesten Wulstkernen angreifenden Kräfte bezüglich ihrer radial nach innen gerichteten Komponente verringert werden, so daß die Gefahr eines seitlichen Ausknickens der Wulstkerne ebenfalls verringert wird. Wegen der geneigt verlaufenden Felgenhörner erzielt man den Vorteil einer erheblich erleichterten Reifenmontage und -demontage.

Gemäß einer vorteilhaften Ausgestaltung der Erfindung verlaufen die Felgenhörner im axial äußeren Bereich ebenfalls geneigt, so daß sie die Reifenwand und damit die Karkasse über einen größeren Bereich abstützen. Nach einer weiteren vorteilhaften Ausgestaltung verlaufen die axial innen von den Felgenhörnern gelegenen Felgensitzflächen für die Reifenwülste in der Weise zur Axialrichtung geneigt, daß der größte Durchmesser im Bereich der Sitzflächen axial außen liegt. Der Neigungswinkel kann zwischen 10 und 40° liegen und beträgt bevorzugt ca. 30°. Weitere vorteilhafte Ausgestaltungen der Erfindung sind den Unteransprüchen zu entnehmen.

Nachfolgend wird ein Ausführungsbeispiel der Erfindung anhand einer Zeichnung näher erläutert.

Es zeigt
- Fig. 1: ein Fahrzeugrad mit einem geneigten Felgenhorn und einer geneigten Sitzfläche für den Reifenwulst in einem radialen Teilschnitt,
- Fig. 2: einen vergrößerten Ausschnitt des Fahrzeugrads der Fig. 1 im Bereich des Felgenhorns und des Reifenwulstes,
- Fig. 3: einen Ausschnitt eines Fahrzeugrads, bei dem der Felgenkranz radial außen eine Rille bildet, die mit einer Polsterschicht aus Gummi ausgefüllt ist,
- Fig. 4: einen Ausschnitt mit einer abgewandelten Polsterschicht für einen Pannenlauf,
- Fig. 5: einen Ausschnitt eines Fahrzeugrads, bei dem sich axial innen zur Sitzfläche für den Reifenwulst unmittelbar eine Tiefbettwand anschließt,
- Fig. 6: ein Fahrzeugrad mit einem Felgenhorn, das axial innen eine geneigte Anlagefläche und axial außen ebenfalls einen abgewinkelten Bereich aufweist, in einem radialen Teilschnitt,
- Fig. 7: einen Radausschnitt, bei dem der Bereich zwischen Felgenhorn und Tiefbettwand vollständig vom Reifenwulst eingenommen wird,
- Fig. 8: ein Fahrzeugrad mit einem Sicherheitsring radial innen vom Reifenwulst in einem radialen Teilschnitt,
- Fig. 9: ein Fahrzeugrad, bei dem ein Sicherheitsring radial außen konisch verläuft und so die Funktion eines Klemmkeils übernimmt, in einem radialen Teilschnitt.

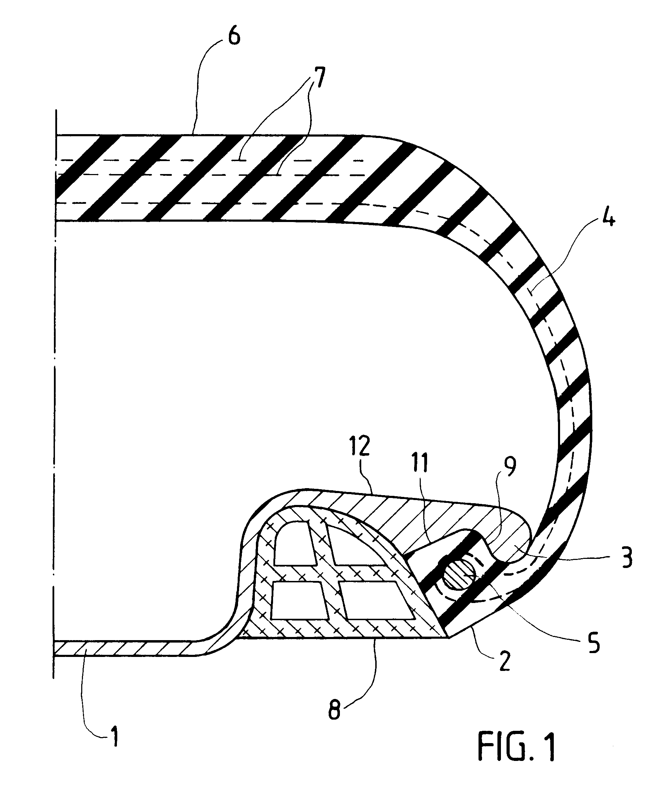

Das Fahrzeugrad der Fig. 1 besteht im wesentlichen aus einer starren einteiligen Felge 1, die in üblicher Weise an einer nicht gezeichneten Felgenschüssel angeschweißt ist, und aus einem Reifen, der mit seinen Wülsten 2 am radial inneren Umfang der Felge 1 neben seitlich außen sich befindlichen, nach innen verlaufenden Felgenhörnern 3 angeordnet ist.

Beim Reifen handelt es sich bevorzugt um einen Gürtelreifen mit einem relativ kleinen Höhe/Breite-Verhältnis, bei dem eine Radialkarkasse 4 in den Wülsten 2 durch Umschlingen von zug- und druckfesten Wulstkernen 5 verankert ist. Zwischen der Karkasse 4 und der Lauffläche 6 befindet sich ein üblicher Verstärkungsgürtel 7. Axial innen vom Reifenwulst 2 kann ein an sich bekannter Abdeckring 8 angeordnet sein.

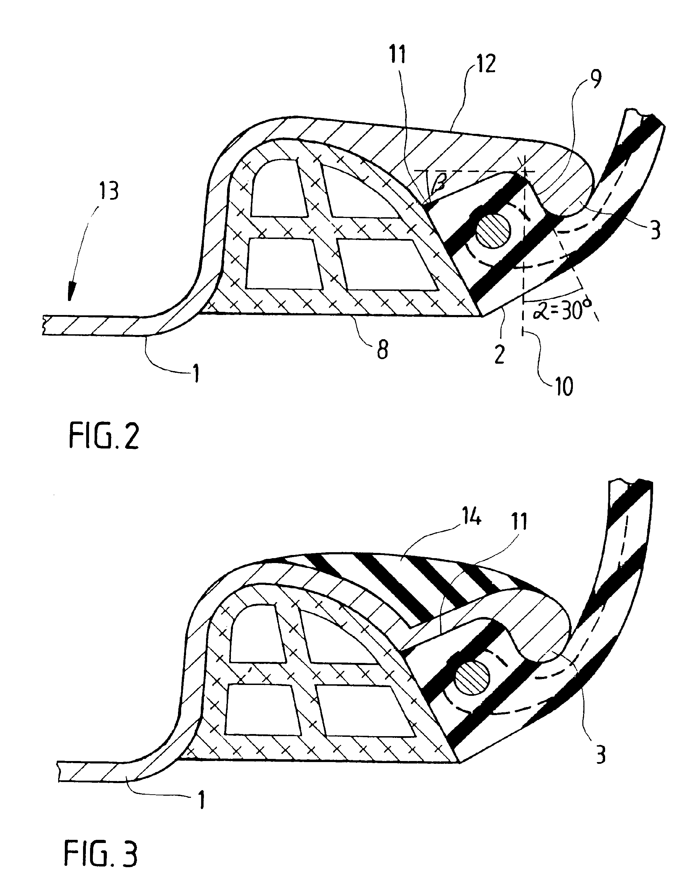

Wie man insbesondere dem vergrößerten Ausschnitt der Fig. 2 entnehmen kann, verläuft die dem Wulst 2 zugekehrte Anlagefläche 9 geneigt zur Radialrichtung 10, und zwar unter einem Winkel α von ungefähr 30°. Die sich dem Felgenhorn 3 nach axial innen hin anschließende Felgensitzfläche 11 für den Reifenwulst 2 verläuft ebenfalls geneigt, und zwar in der Weise, daß sie axial innen ihren kleinsten Durchmesser hat. Der Neigungswinkel β beträgt vorliegend knapp 30°. Die Winkelwerte für α können bei Bedarf zwischen 5 und 50° liegen, während für den Winkel β Werte zwischen 10 und 40° in Frage kommen. Radial außen von den Felgensitzflächen 11 bildet die Felge 1 flach nach außen abfallende Pannenlaufstützflächen 12, während sich im Mittelbereich der Felge 1 ein Tiefbett 13 befindet.

Fig. 3 zeigt eine Variante, die im Bereich des Felgenhorns 3 und der Felgensitzfläche 11 der von Fig. 1 entspricht, während radial außen die Felge 1 eine rillenförmige Ausbuchtung bildet, die von einer Polsterschicht 14 aus Gummi ausgefüllt wird, die wiederum als Pannenlaufstützfläche dient.

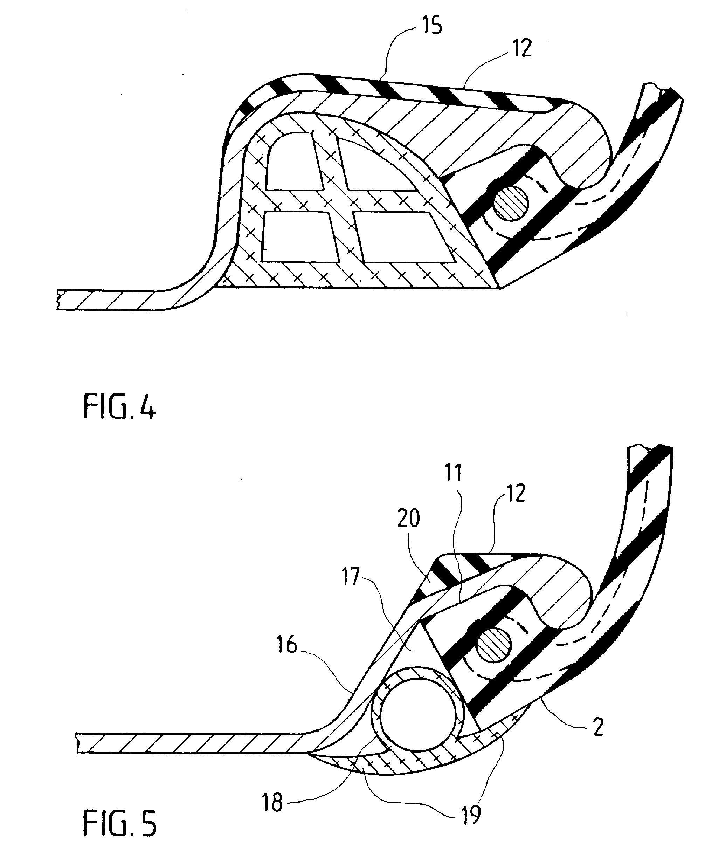

Das Fahrzeugrad der Fig. 4 unterscheidet sich von dem der Fig. 1 lediglich dadurch, daß radial außen im Bereich der Pannenlaufstütztfläche 12 eine Polsterschicht 15 aus Gummi eingearbeitet ist. Somit dient nunmehr diese Schicht 15 als Auflagefläche bei einem Pannenlauf.

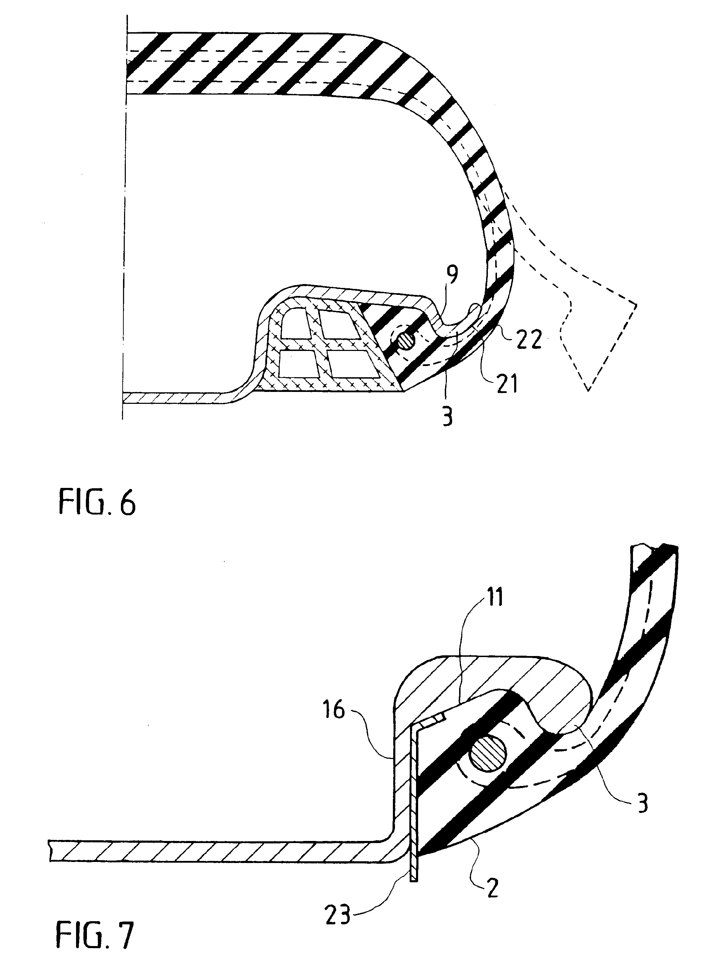

Fig. 5 stellt insoweit eine Abwandlung dar, als sich der Felgensitzfläche 11 nach axial innen hin unmittelbar eine Tiefbettwand 16 anschließt, die schräg zur Radialrichtung verläuft, so daß zwischen Reifenwulst 2 und der Tiefbettwand 16 ein keilförmiger Raum 17 gebildet wird, der von einem umlaufenden schlauchförmigen Abdeckring 18 mit zwei Abdecklippen 19 abgedeckt wird. Radial außen von den Felgensitzflächen 11 befindet sich ein keilförmiges Gummipolster 20, das radial außen Pannenlaufstützflächen 12 bildet.

In Fig. 6 ist ein Fahrzeugrad dargestellt, das sich von Rädern nach dem Stand der Technik zum einen dadurch unterscheidet, daß die Anlagefläche 9 des Felgenhorns 3 in der beschriebenen Weise geneigt verläuft, zum anderen dadurch, daß das Felgenhorn 3 im axial äußeren Bereich 21 ebenfalls geneigt verläuft, so daß die Reifenwand 22 über einen größeren Bereich abgestützt wird. Der gestrichelte Verlauf des Reifens stellt die Vulkanisierstellung dar.

Das Fahrzeugrad der Fig. 7 mit einem geneigten Felgenhorn 3 und einer geneigten Felgensitzfläche 11 zeichnet sich dadurch aus, daß der Raum zwischen dem Felgenhorn 3 und der Tiefbettwand 16 vollständig vom Reifenwulst 2 eingenommen wird. Als Demontagemittel für eine Reifendemontage dienen dauerhaft eingelegte oder anvulkanisierte Hebel oder Streifen 23. Es reicht aus, wenn einige dieser Mittel 23 über den Umfang verteilt angeordnet werden.

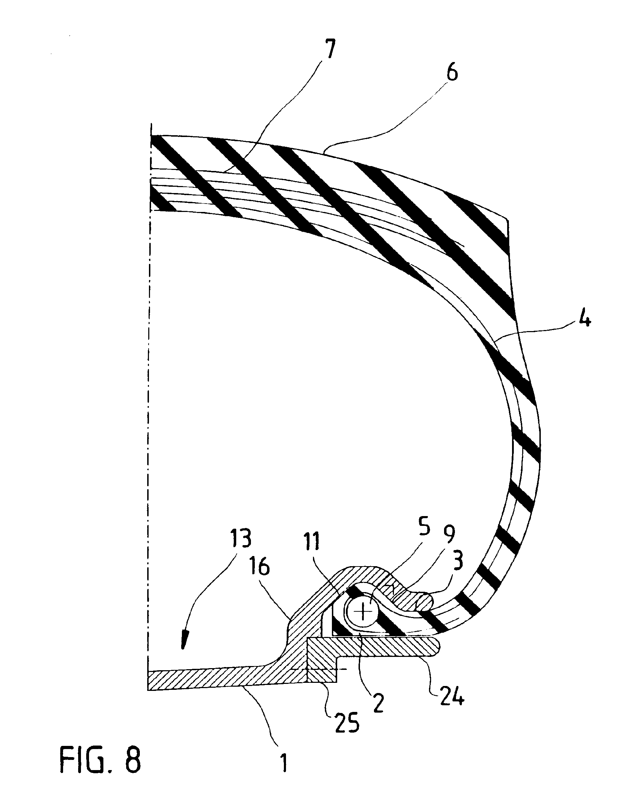

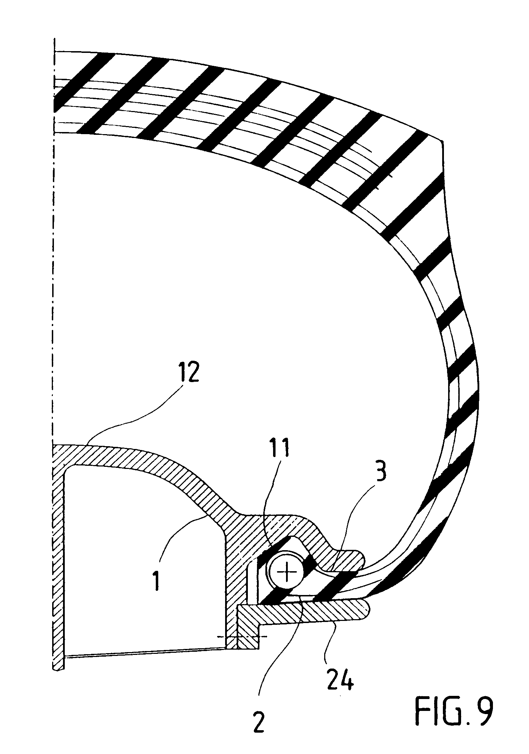

In den Fig. 8 und 9 sind Fahrzeugräder dargestellt, die bevorzugt für den Einsatz bei Lastkraftwagen oder Bussen gedacht sind. Der Reifen weist bei ihnen wiederum eine Radialkarkasse 4 auf, die in den Wülsten 2 durch Umschlingen zug- und druckfester Wulstkerne 5 verankert ist. Zwischen der Lauffläche 6 und der Karkasse 4 befindet sich ein üblicher mehrlagiger Verstärkungsgürtel 7.

Die Felge ist in Fig. 8 als Tiefbettfelge ausgebildet und geht von einer überwiegend schrägen Tiefbettwand 16 seitlich außen in zur Radialrichtung geneigte Felgenhörner 3 über. Die Anlagefläche 9 der Felgenhörner 3 und die Felgensitzfläche 11 weisen Neigungswinkel der vorstehend beschriebenen Werte auf. Im Bereich des Tiefbetts 13 kann ein nicht gezeichneter Pannenlaufstützkörper bekannter Art angeordnet sein. Radial innen vom Wulst 2 befindet sich ein umlaufender Sicherheitsring 24, der mit einem Flansch 25 an der Felge 1 befestigt ist. Der Sicherheitsring 24 der Fig. 8, der gleichzeitig eine Zentrierwirkung hat, verläuft radial außen achsparallel und liegt unmittelbar am Wulst 2 an. Beim Aufpumpen des Reifens übt er eine Klemmwirkung auf den Wulst 2 aus.

Das Fahrzeugrad der Fig. 9 unterscheidet sich von dem der Fig. 8 durch eine anders ausgebildet Felge 1, die im Mittelbereich eine Pannenlaufstützfläche 12 aufweist und durch einen konisch verlaufenden Sicherheitsring 24, der wie ein Klemmkeil auf den Reifenwulst 2 wirkt. Durch das formschlüssige Einpassen des Sicherheitsrings 24 in die Felge 1 wird wieder zusätzlich eine Zentrierwirkung erzielt. Im Bereich des Felgenhorns 3 und der Felgensitzfläche 11 stimmt das Fahrzeugrad der Fig. 9 mit dem vorher beschriebenen überein.

Die Sicherheitsringe 24 befinden sich zumindest auf der Seite eines jeden Rades, die am Fahrzeug nach außen weist, können jedoch auch an allen Reifenwülsten 2 vorgesehen sein.

## Patentansprüche

1. Luftbereiftes Fahrzeugrad mit einem Reifen aus Gummi oder gummiähnlichen Kunststoffen, dessen Wülste (2) am radial inneren Umfang der Felge (1) angeordnet sind und dessen Karkasse (4) in den Wülsten (2) durch Umschlingen von zug- und druckfesten Wulstkernen (5) verankert ist, und mit einer starren Felge, (1) die im wesentlichen sich nach innen erstreckende Felgenhörner (3) und axial innen davon Felgensitzflächen (11) für die Reifenwülste (2) aufweist und die auf der radial äußeren Seite mit Pannenlaufstützflächen (12) versehen sein kann, die den Wülsten (2) zugekehrten Anlageflächen (9) der Felgenhörner (3) gegenüber der Radialrichtung (10) nach außen hin geneigt sind, **dadurch wobei gekennzeichnet,** daß der Neigungswinkel (α) zwischen 5 und 50° liegt, daß die axial innen von den Felgenhörnern (3) gelegenen Felgensitzflächen (11) für die Reifenwülste (2) in der Weise zur Axialrichtung geneigt sind, daß der größte Durchmesser im Bereich der Sitzflächen (11) axial außen liegt, und daß der Neigungswinkel (β) gegenüber der Axialrichtung zwischen 10 und 40° liegt.

2. Fahrzeugrad nach Anspruch 1, dadurch gekennzeichnet, daß der Neigungswinkel (α) der Anlageflächen (9) der Felgenhörner (3) zwischen 25 und 35° liegt.

3. Fahrzeugrad nach Anspruch 1, dadurch gekennzeichnet, daß die Felgenhörner (3) im axial äußeren Bereich (21) ebenfalls geneigt verlaufen und so die Reifenwand (22) über einen größeren Bereich abstützen.

4. Fahrzeugrad nach Anspruch 1, dadurch gekennzeichnet, daß sich zumindest im Bereich der Felgensitzflächen (11) auf der radial äußeren Seite des Felgenkranzes je eine Polsterschicht (14, 15, 20) aus Gummi befindet, die als Pannenlaufstützfläche dient.

5. Fahrzeugrad nach Anspruch 1, dadurch gekennzeichnet, daß der Raum zwischen dem Felgenhorn (3) und der seitlichen Tiefbettwand (16) der Felge (1) vollständig vom Reifenwulst (2) eingenommen wird und daß sich an zumindest einer Stelle zwischen der Tiefbettwand (16) und dem Reifenwulst (2) ein Demontagemittel (23) befindet.

6. Fahrzeugrad nach Anspruch 1, dadurch gekennzeichnet, daß sich an zumindest einem Wulst ein Sicherheitsring (24) befindet, der radial innen am Wulst (2) anliegt.

7. Fahrzeugrad nach Anspruch 1 und 7, dadurch gekennzeichnet, daß der Sicherheitsring (24) auf der radial äußeren Seite achsparallel oder konisch in der Weise verläuft, daß er axial außen seinen größten Durchmesser aufweist.

## Claims

1. Vehicle wheel, fitted with a pneumatic tyre, having a tyre formed from rubber or rubber-like plastics materials, the beads (2) of said tyre being disposed on the radially inner circumference of the rim (1), and the carcase (4) of said tyre being secured in the beads (2) by being looped around substantially inextensible and pressure-resistant bead cores (5), and said vehicle wheel having a rigid rim (1), which substantially comprises inwardly extending rim flanges (3) and rim seating surfaces (11), which extend axially internally thereof, for the tyre beads (2), and which may be provided with run-on supporting faces (12) on the radially external surface, the abutment faces (9) of the rim flanges (3) facing the beads (2) being outwardly inclined relative to the radial direction (10), characterised in that the angle of inclination (α) lies between 5° and 50°, in that the rim seating surfaces (11), which are situated axially internally of the rim flanges (3), for the tyre beads (2) are inclined towards the axial direction in such a manner that the greatest diameter lies axially externally in the region of the seating surfaces (11), and in that the angle of inclination (β) relative to the axial direction lies between 10° and 20°.

2. Vehicle wheel according to claim 1, characterised in that the angle of inclination (α) of the abutment faces (9) of the rim flanges (3) lies between 25° and 35°.

3. Vehicle wheel according to claim 1, characterised in that the rim flanges (3) also extend in an inclined manner in the axially external region (21) and, in consequence, support the tyre wall (22) over a greater region.

4. Vehicle wheel according to claim 1, characterised in that a cushioning layer (14, 15, 20), which is formed from rubber and serves as a run-on supporting face, is situated on the respective radially external surface of the rim ring, at least in the region of each of the rim seating surfaces (11).

5. Vehicle wheel according to claim 1, characterised in that the area between the rim flange (3) and the lateral drop base wall (16) of the rim (1) is entirely occupied by the tyre bead (2), and in that a disassembling means (23) is disposed at at least one location between the drop base wall (16) and the tyre bead (2).

6. Vehicle wheel according to claim 1, characterised in that a safety ring (24) is situated on at least one bead and abuts radially internally against the bead (2).

7. Vehicle wheel according to claims 1 and 7, characterised in that the safety ring (24) extends along the radially external surface in an axis-parallel or conical manner such that it has its greatest diameter axially externally.

## Revendications

1. Roue de véhicule à pneumatique, comportant un pneumatique en caoutchouc ou en matières synthétiques semblables au caoutchouc, dont les talons (2) sont disposés sur la périphérie radialement intérieure de la jante (1) et dont la carcasse (4) s'ancre dans les talons (2) par enroulement autour des tringles de talon (5) résistant à la traction et à la compression, et comportant une jante rigide (1) qui présente des bords rabattus (3) de jante qui s'étendent essentiellement vers l'intérieur et des surfaces d'assise sur jante (11), qui en sont axialement vers l'intérieur, pour les talons (2) de pneumatique, et jante qui peut présenter, sur sa surface radialement extérieure, des surfaces d'appui (12) pour rouler en cas de crevaison, étant précisé que les surfaces support (9), orientées vers les talons (2), des bords rabattus (3) de la jante sont inclinées vers l'extérieur par rapport à la direction radiale (10), roue caractérisée par le fait que l'angle d'inclinaison (α) vaut entre 5 et 50°, par le fait que les surfaces d'assise sur jante (11), situées axialement à l'intérieur des bords rabattus (3) de la jante, pour talon (2) du pneumatique sont inclinées par rapport à la direction axiale de façon telle que le plus grand diamètre, dans la zone des surfaces d'assise (11), se trouve axialement vers l'extérieur, et par le fait que l'angle d'inclinaison (β) par rapport à la direction axiale vaut entre 10° et 20°.

2. Roue de véhicule selon la revendication 1, caractérisée par le fait que l'angle d'inclinaison (α) des surfaces supports (9) des bords rabattus (3) de la jante vaut entre 25° et 35°.

3. Roue de véhicule selon la revendication 1, caractérisé par le fait que les bords rabattus (3) de la jante sont également inclinés dans la zone axialement extérieure (21) et appuient donc la paroi (22) du pneumatique sur une plus grande zone.

4. Roue de véhicule selon la revendication 1, caractérisée par le fait qu'au moins dans la zone des surfaces d'assise sur jante (11) se trouve, sur chacun des côtés, radialement extérieurs, de la couronne de jante, une couche de rembourrage (14, 15, 20) en caoutchouc qui sert de surface d'appui pour rouler en cas de crevaison.

5. Roue de véhicule selon la revendication 1, caractérisée par le fait que l'espace situé entre le bord rabattu (3) de la jante et la paroi latérale (16) de la base creuse de la jante (1) est entièrement occupée par le talon (2) du pneumatique et par le fait qu'en au moins une position située entre la paroi (16) de la base creuse et le talon (2) du pneumatique se trouve un moyen de démontage (23).

6. Roue de véhicule selon la revendication 1, caractérisée par le fait que sur au moins un talon se trouve une couronne de sécurité (24) qui s'appuie contre le talon (2) radialement vers l'intérieur.

7. Roue de véhicule selon les revendications 1 et 7, caractérisée par le fait que, du côté radialement extérieur la couronne de sécurité (24) part parallèlement à l'axe ou en cône de façon à présenter son plus grand diamètre axialement vers l'extérieur.
